Europäisches Patentamt

European Patent Office

Office européen des brevets

(11) Publication number: **0 186 056 B1**

# EUROPEAN PATENT SPECIFICATION

(45) Date of publication of patent specification: **16.10.91**  (51) Int. Cl.⁵: **H04N 7/167**

(21) Application number: **85115841.0**

(22) Date of filing: **12.12.85**

(54) Video decoder apparatus.

(30) Priority: **17.12.84 US 682651**

(43) Date of publication of application:
**02.07.86 Bulletin 86/27**

(45) Publication of the grant of the patent:
**16.10.91 Bulletin 91/42**

(84) Designated Contracting States:
**DE FR GB IT NL**

(56) References cited:
**EP-A- 0 127 383**
**FR-A- 2 539 938**
**GB-A- 1 590 579**

(73) Proprietor: **ITT INDUSTRIES INC.**
**320 Park Avenue**
**New York, NY 10022(US)**

(72) Inventor: **Hamilton, Jeffrey Scott**
**45, Oakwood Drive**
**Oxford, CT 06483(US)**

(74) Representative: **Klunker . Schmitt-Nilson .**
**Hirsch**
**Winzererstrasse 106**
**W-8000 München 40(DE)**

## Description

### Background of the Invention

The invention pertains to decoding systems usable with video signals.

In pay or cable television systems, some form of signal scrambling is required to ensure that only paid subscribers will receive the product. The use of signal scrambling also requires the use of receiver decoders or descramblers. The potential number of subscribers can be quite large. As a result, it becomes profitable for unauthorized organizations or companies to sell or provide unauthorized decoders or descramblers. For this reason, the scrambling system must be secure, not only against reception by normal televisions, but also against the design of inexpensive pirate receiver decoders or descramblers.

Existing devices are known for encoding and decoding video signals using line-rotation video scrambling. Line-rotation video scrambling intentionally interchanges segments of each video line prior to transmission. At the receiving end, a decoder must be used to restore each of the segments to its proper temporal order.

At the transmission end of a conventional line-rotation video scrambling system, horizontal scan lines are cut at varying points and the line segments switched in time. This, in effect, rotates the end of each line to the beginning of the same line. At the reception end, the scrambled video lines are "rotated" back into the original time sequence by the local decoder apparatus.

In FR-A-2,539,938 is disclosed a video decoder apparatus having an input-output converter unit and a control unit. For line-rotation feasability the decoder apparatus comprises means for storing a first plurality of data samples of video information received from the converter unit and means for addressing unique sample storage locations in the storing means coupled to the control unit. The reading of a stored line starts only if the line is completely stored. Therefore, the writing and reading modes concern alternate video lines and need at least two line memories.

The storing means include means for reading out a data sample from the first plurality prestored at a respective addressed storage location to the converter unit and means for writing into a suitable addressed sample storage location a respective data sample from a second plurality received from the converter unit, compare also the preamble part of claim 1.

The known decoder circuitry usable with line-rotation scrambling requires the use of two memory circuits with information alternately read out of each. Each of the memory circuits is used to temporarily store a next scrambled line of video while the other memory is reading out a current, unscrambled line of video.

Line-rotation video decoding circuitry is often used in combination with other television receiver circuitry. Since it is desirable to integrate as many circuits as possible onto a single chip, there exists a need to minimize the complexity of the decoder circuit without impairing its ability to carry out the decoding operation.

### Summary of the Invention

In accordance with the invention, an apparatus and a method are provided for decoding previously encoded information signals. The decoder apparatus includes an input-output converter unit and a control unit. The decoder apparatus further includes means for storing at least a plurality of data samples for a single digitalized horizontal line of video information received from the converter unit and means for addressing sample storage locations in the storing means. The addressing means are coupled to the control unit. The storing means includes means for reading out a video data sample prestored at a respective addressed storage location to the converter unit and for writing into the same addressed sample storage location subsequent a respective video data sample received from the converter unit. In an embodiment of the invention, the capacity of the storing means in the decoder apparatus is essentially equal to only a single line of video information. In yet another embodiment of the invention, the addressing means is presettable to a predetermined value. The addressing means can further include means for sequentially addressing a plurality of storage locations of the storing means starting from the preset value.

In yet a further embodiment of the invention the addressing means can include an incrementally increasing address counter or an incrementally decreasing address counter with a comparing means which includes a comparator coupled to the address counter. The address counters can be binary counters.

In accordance with the invention, a method is possible of decoding a previously encoded information signal in a decoder. The decoder has a storage unit and a coupled address register. The method includes the steps of storing a predetermined set of samples of a first encoded information signal in the storage unit; determining a decoded starting address and loading the decoded starting address into the address register; reading out from the storage unit a sample of decoded information at a location specified by the address in the address register; writing into the same storage location a sample of encoded information from a subsequent encoded information signal; comparing the current address in the address register to a predetermined address value and returning to determine a new decoded starting address, (as above), if the current address equals the predetermined end address or changing in a predetermined fashion the address in the address register if not equal and returning to read out from the storage unit (as above).

In a further embodiment of the method, the decoded starting address changes in a predetermined fashion for each subsequent encoded information signal. Further, in accordance with the method each encoded information signal can correspond to an encoded video horizontal line signal having a predetermined number of samples. In a further embodiment of the method, the step of changing the address in the address register can include incrementing by one count the address in the address register or alternately decrementing by one count the address in the address register.

In yet another embodiment of the method, wherein the encoded video line signal includes N samples per line, and each line is split into at least two segments at a predetermined split address at a transmission site, the current decoder starting address is then determined in accordance with the following formula:

$$\text{Starting Address} = (N\text{-}SP + PSA) \text{ modulo } N$$

where N is the number of samples, SP is the split address and PSA is the previous starting address.

Brief Description of the Drawings

The invention may be better understood from a reading of the following description in conjunction with the drawings in which:

Fig. 1 is a block diagram schematic of a prior art line-rotation decoding apparatus; and

Fig. 2 is a block diagram schematic of a line rotation decoding apparatus in accordance with the present invention.

Detailed Description

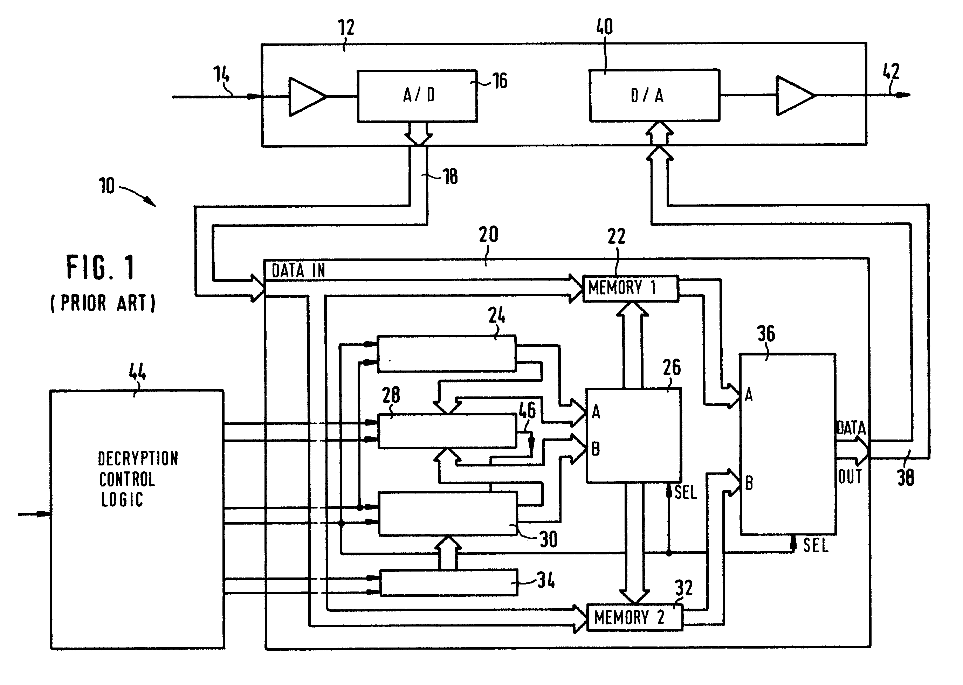

With respect to the figures, Fig. 1 illustrates in block diagram form, a prior art line-rotation decoder system 10. The system 10 is usable, for example, in connection with a television receiver. The system 10 includes an input-output conversion unit 12 which receives scrambled analog composite video signals on a line 14. At a transmission site, not shown, a line-rotation scrambling operation has previously been performed on each horizontal line signal in the composite video signal received on the line 14.

The analog composite video signal is first digitized by an analog-to-digital converter (A/D) 16 in the conversion unit 12. The output of the A/D 16, in the form of 8-bit digital samples, is transmitted via an 8-bit data bus 18 to a decoder unit 20.

The function of the decoder unit 20 is to reverse the line-rotation scrambling operation performed at the transmission site. The unit 20 includes a read-write memory 22. The memory 22 includes a plurality of locations for storing 8-bit video data samples received from the bus 18. The capacity of the memory 22 is large enough to store a set of digital samples from the bus 18 corresponding to a single horizontal video line. The read-write memory 22 may be a random access memory or a serial, shift register, memory. The implementation of the memory 22 is conventional in the art.

Video samples are stored in locations in the memory 22 under the control of a write select address counter 24. The write select counter 24 could be, for example, a 10-bit binary counter. Outputs from the write select counter 24 are coupled by a selector circuit 26 to a 10-bit address input of the memory 22. The selector circuit 26 could, for example, be a conventional multiplexor. Outputs from the write counter 24 are also coupled to a 10-bit comparator 28. A read select address counter 30 is also coupled to the data selector 26 and the comparator 28.

At the same time as the memory 22 is being loaded with sampled video horizontal line data from the bus 18, samples corresponding to a previous line of video data are being read-out from a second memory 32. Ten bit address signals are supplied to the memory 32 by the read-address counter 30 via the data selector 26. The memory 32 has the same storage capacity as does the memory 22 and may be implemented in the same manner as the memory 22.

The counter 30 has been preloaded with the address of the first sample of the original unscrambled video line by start-address circuitry 34. The start address circuitry 34 could be implemented, for example, as a combinational circuit alone or as a combinational circuit combined with a storage register. The implementation of the start-address circuitry is conventional in the art.

From this "start-address", the counter 30 is incremented to its highest address, overflows to zero, and continues incrementing to a value of "start-address-minus-1". At this time the entire previous line has been read-out from the memory 32. A second data selector, or multiplexor, 36 couples the output signals from the memory 32 to a data out bus 38. The bus 38 is in turn electrically connected to an 8-bit digital to analog converter (D/A) 40. The D/A 40 generates a decoded analog composite video signal on an output line 42 for use by a local television receiver. Conventional control logic 44 provides timing and control signals to the system 10.

As is conventional in the art, the comparator 28 generates an ouput signal or indicium on a line 46 indicating when a predetermined end address has been reached by the read select counter 30. The signal on the line 46 can be used to clear the counter 30. Bits or stages of the counter 30 can then be set by the start-address circuitry 34 to a new start-address value for the next line of decoded video information.

The decoding process is now repeated with the functions of the memories 22 and 32 being interchanged by means of the data selectors 26 and 36. The memory 32 will now be loaded with video data samples from the bus 18 for the next line of video under control of the write address counter 24. The memory 22 will simultaneously read-out to the selector 36 and the output bus 38, the decoded video samples for the current horizontal line under control of the read address counter 30.

The system 10 requires memories 22 and 32 for storage of data for the active portion of two video lines, address counters 24 and 30 for each respective memory 22 and 33, and two selectors or multiplexors 26 and 34. For most applications the horizontal blanking interval need not be stored in the memories 22 or 32.

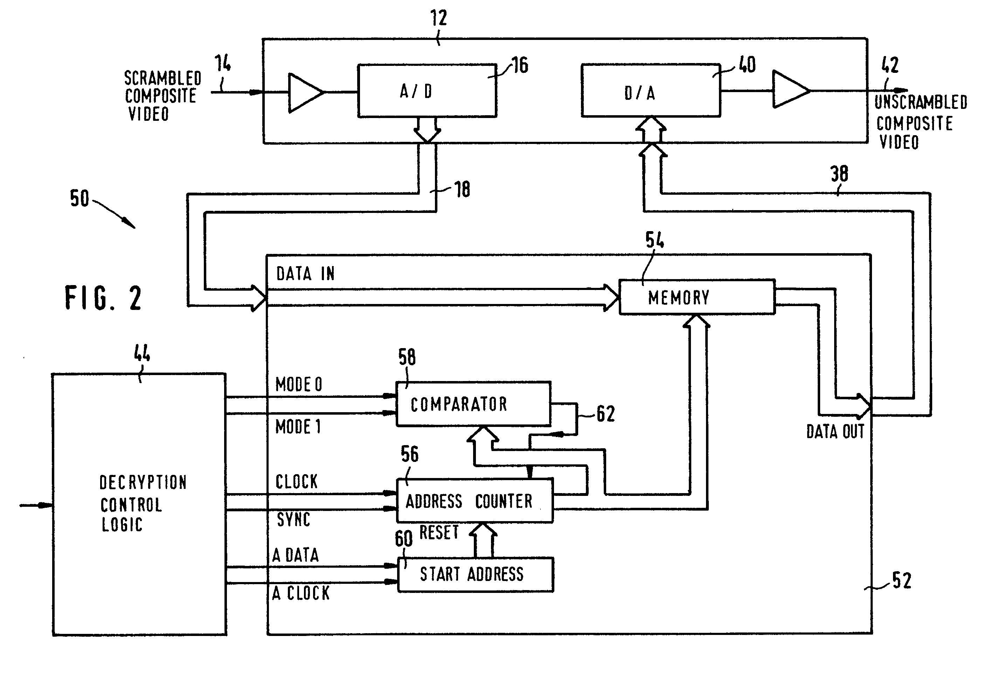

Figure 2 illustrates a system 50 in accordance with the present invention. The system 50 includes the same converter unit 12 and control logic 44 disclosed above and illustrated in Figure 1. The system 50 also includes a decoder unit 52 in accordance with the present invention.

An important advantage of the decoder unit 52 is that the unit 52 uses the identical converter unit 12 as does the prior art decoder unit 20 of Figure 1 and has the same input-output configuration as does the system 10. However, the decoder 52 requires only one-half the storage capacity and fewer control circuits than does the decoder 20.

The decoder 52 includes a memory 54 with each sample storage location capable of storing 8-bit samples received off the input bus 18. The memory 54 is large enough to store a single, digital, horizontal line of video information. Each of the memories 22 and 32 has the same capacity as does the memory 54. The memory 54 also may be implemented as a random access memory or a serial, shift register, memory. The exact implementation of the memory 54 is not a limitation of the present invention.

Address signals are provided to the memory 54 by a 10-bit address counter 56. The address counter 56 is also coupled to a 10-bit end address comparator 58. Start address circuit 60 provides an initial start address for the address counter 56. The address counter 56 could be implemented, for example, as a binary up-counter or alternately as a binary down-counter.

Before the beginning of an active portion of a horizontal line of video information on the bus 18, the address counter 56 is loaded with the start-address of the previous line of video information already stored in the memory 54. The previously stored data sample of video information is then read out of the location in the memory 54 addressed by the counter 56. Immediately thereafter, the contents of this storage location are overwritten by a new data sample, corresponding to a current line of video information on the bus 18. The counter 56 is then pulsed to form a new address. As each prestored sample is output to the bus 38 from an addressed location in the memory 54, that location is immediately overwritten by a new sample of video information from the bus 18. If the counter 56 is an up-counter, it sequentially is incremented to its highest address. The counter 56 then overflows to zero and continues to increment to a value of start-address-minus-1.

At this point the entire previous line of video information has been output in time corrected form to the bus 38. In addition, during this same time period, the next line of video information has been stored in the single line memory 54. The exact details of reading out a first data sample and overwriting that location immediately with a subsequent data sample are, in general, conventional in the art. Specific details readily can be provided by one of skill in the art.

An output signal on a line 62 from the comparator 58 clears the address counter 56 when a predetermined end address value has been reached. The input to the comparator 58 can be obtained from the previous end address value sensed for the counter 56 and then used during the next line decoding operation. The subsequent lines are rotated in the same manner, without need of the second address counter 30, the second memory 32 or multiplexors.

There exists an important operational difference between the decoder 52 and the decoder 20. The start-address value for a new line in the decoder 52 will be rotated along with the time correcting of the previous line. It is known with respect to the decoder 20 that the relation between the split address at the encryption end and the start-address at the decryption end is given by the formula:

$$ST = N - SP$$

where N is the number of samples per horizontal line of video, ST is the start-address (0 to N-1), and SP is the split address.

In the converter 52, the relation becomes:

$$ST = (N\text{-}SP + PST) \bmod N$$

where PST is the start-address used to decrypt the previous line. Thus, one additional sum and modulo operation must be performed in connection with the counter 52. However, it is done only at the horizontal line rate and can be done at the transmitter as, for most applications, there will be many receivers for each transmitter. An alternative would be to include such a function in a circuit at each receiver. This would reduce the savings in circuitry that the invention provides. Doing so; however, would provide complete replacement compatibility with the converter 20.

As an alternate embodiment, encryption could be hardened further by adding a decriment capability to the address counter 56. In this way the line segments could be transmitted in reverse time as well as interchanged. The two segments could be independently selected for normal or reverse time.

Because of the substantial reduction in the circuitry of the decoder 52, all of the necessary functions could be integrated onto a chip along with other control circuitry that could include, for example, a microprocessor type control unit.

While a specific embodiment has been disclosed herein, it will be understood that the broader aspects of the invention include those alternate forms of circuits or counters as would be known to those of skill in the art.

## Claims

1. A video decoder apparatus having an input-output converter unit (12) and a control unit (44),
   - means for storing a first plurality of data samples of video information received from the converter unit (12) and
   - means for addressing unique sample storage locations in the storing means, coupled to the control unit (44),
     -- with the storing means including means for reading out a data sample from the first plurality prestored at a respective addressed storage location to the converter unit (12),
   characterized in that
     - the means for storing (54) has a capacity for storing data samples for essentially only a single line of video information and
     - the means for addressing (56, 58, 60) includes means for writing into the same addressed sample storage location a respective data sample from a second plurality received from the converter unit (12).

2. A decoder apparatus as defined in claim 1, characterized in that the addressing means (56, 58, 60) is presettable to a predetermined value.

3. A decoder apparatus as defined in claim 2, characterized in that the addressing means (56, 58, 60) includes means for sequentially addressing a plurality of storage locations of the storing means starting from the preset value.

4. A decoder apparatus as defined in claim 3, characterized by means (58) for comparing an address value generated by the addressing means (56, 58, 60) to a second predetermined value and for generating a selected indicium in response thereto.

5. A decoder apparatus as defined in claim 4, characterized by means (60) for setting the addressing means (56, 58, 60) to the predetermined value in response to the presence of the selected indicium.

6. A decoder apparatus as defined in claim 5, characterized in that the reading and writing means include means for overwriting the same addressed location immediately after reading said location.

7. A decoder apparatus as defined in claim 5, characterized in that the addressing means (56, 58, 60) include incrementally increasing or decreasing address counter (56) and that the comparing means include a comparator (58) coupled to the address counter.

8. A method of decoding a plurality of previously encoded information signals in a decoder (50) having a storage unit (54) and a coupled address register (56)
   characterized by the following steps:
     (A) storing a predetermined set of samples of a first encoded information signal in the storage unit (54) which has a capacity for storing data samples for essentially only a single line of video information;
     (B) determining a decoded starting address and loading the starting address in the address register (56);
     (C) reading out from the storage unit (54) a sample of decoded information at a location specified by the address in the address register (56);

(D) writing into the same location a sample of encoded information from a subsequent encoded information signal;

(E) comparing the current address in the address register (56) to a predetermined end address value and if the same returning to step (B) above, otherwise,

(F) changing in a predetermined fashion the address in the address register (56) and then returning to step (C) above.

9. A method of decoding as defined in claim 8, characterized in that the starting address determined in step (B) changes in a predetermined fahsion for each encoded information signal, said signal being an encoded video horizontal line signal with a predetermined number of samples.

10. A method of decoding as defined in claim 9, characterized in that the change of the address in the address register (56) in step (F) above includes incrementing or decrementing by one count the address in the address register (56).

11. A method of decoding as defined in claim 9, characterized in that each encoded video line signal includes N samples per line, each line is split into at least two segments at a predetermined split address in a transmission site and the current decoded starting address of step (B) is determined in accordance with the formula:

Starting Address = (N-SP + PSA) modulo N, where N is the number of samples, SP is the split address and PSA is the previous starting address.

**Revendications**

1. Dispositif de décodage vidéo comportant une unité formant convertisseur d'entrée-sortie (12) et une unité de commande (44),
   - des moyens pour mémoriser une première pluralité d'échantillons de données d'une information vidéo reçue de l'unité formant convertisseur (12), et
   - des moyens pour adresser des emplacements uniques de mémorisation d'échantillons dans les moyens de mémoire, accouplés à l'unité de commande (44),
   -- les moyens de mémoire comprenant des moyens pour lire un échantillon de données à partir de la première pluralité d'échantillons de données préalablement mémorisée en un emplacement respectif de mémoire adressé, en l'envoyant à l'unité formant convertisseur (12),
caractérisé en ce que
   - les moyens de mémoire (54) possèdent une capacité permettant de mémoriser des échantillons de données concernant essentiellement une seule ligne d'information vidéo, et
   - les moyens d'adressage (56,58,60) comprennent des moyens pour enregistrer au même emplacement adressé de mémorisation d'échantillons, un échantillon respectif de données parmi une seconde pluralité reçue de l'unité formant convertisseur (12).

2. Dispositif de décodage selon la revendication 1, caractérisé en ce que les moyens d'adressage (56,58,60) peuvent être préréglés à une valeur prédéterminée.

3. Dispositif de décodage selon la revendication 2, caractérisé en ce que les moyens d'adressage (56,58,60) comprennent des moyens pour adresser séquentiellement une pluralité d'emplacements de mémoire des moyens de mémoire à partir de la valeur préréglée.

4. Dispositif de décodage selon la revendication 3, caractérisé par des moyens (58) pour comparer une valeur d'adresse produite par les moyens d'adressage (56,58,60) à une seconde valeur prédéterminée et pour produire un indice sélectionné en réponse à cette comparaison.

5. Dispositif de décodage selon la revendication 4, caractérisé par des moyens (60) pour régler les moyens d'adressage (56,58,60) à la valeur prédéterminée en réponse à la présence de l'indice sélectionné.

6. Dispositif de décodage selon la revendication 5, caractérisé en ce que les moyens de lecture et d'enregistrement comprennent des moyens pour réaliser un enregistrement en superposition au même emplacement adressé, juste après la lecture dudit emplacement.

7. Dispositif de décodage selon la revendication 5, caractérisé en ce que les moyens d'adressage (56,58,60) incluent un compteur d'adresses (56) réalisant une incrémentation ou une décrémentation, et que les moyens comparateurs comprennent un comparateur (58) accouplé au compteur d'adresses.

8. Procédé de décodage d'une pluralité de signaux d'informations codés préalablement, dans un décodeur (50) possédant une unité de mémoire (54) et un registre d'adresses couplé (56),

caractérisé par les étapes suivantes:

(A) mémoriser un ensemble prédéterminé d'échantillons d'un premier signal d'information codé dans l'unité de mémoire (54), qui possède une capacité pour mémoriser des échantillons de données sensiblement pour une seule ligne d'informations vidéo;

(B) détermination d'une adresse de départ décodée et chargement de l'adresse de départ dans le registre d'adresses (56);

(C) lecture, à partir de l'unité de mémoire (54), d'un échantillon de l'information décodée en un emplacement spécifié par l'adresse dans le registre d'adresses (56);

(D) enregistrement, au même emplacement, d'un échantillon d'information codée à partir d'un signal d'information codé ultérieur;

(E) comparaison de l'adresse actuelle présente dans le registre d'adresses (56) à une valeur d'adresse finale prédéterminée et, s'il y a identité, retour à l'étape (B) précédente, ou sinon

(F) modification, d'une manière prédéterminée, de l'adresse dans le registre d'adresses (56), puis retour à l'étape (C) indiquée précédemment.

9. Procédé de décodage selon la revendication 8, caractérisé en ce que l'adresse de départ déterminée lors de l'étape (B) varie d'une manière prédéterminée pour chaque signal d'information codé, ledit signal étant un signal codé de ligne horizontale vidéo, avec un nombre prédéterminé d'échantillons.

10. Procédé de décodage selon la revendication 9, caractérisé en ce que la modification de l'adresse dans le registre d'adresses (56) lors de l'étape (F) précédente comprend l'incrémentation ou la décrémentation d'un pas de comptage, de l'adresse contenue dans le registre d'adresses (56).

11. Procédé de décodage selon la revendication 9, caractérisé en ce que chaque signal codé de ligne vidéo comprend N échantillons par ligne, chaque ligne est subdivisée en au moins deux segments à une adresse prédéterminée de subdivision dans un site de transmission, et l'adresse de départ actuelle décodée obtenue lors de l'étape (B) est déterminée conformément à la formule:

adresse de départ = (N-SP+PSA) modulo N,

N étant le nombre d'échantillons, SP l'adresse de subdivision et PSA l'adresse de départ précédente.

**Patentansprüche**

1. Bildinformationsdekodiereinrichtung mit einer Ein-Ausgabe-Wandlereinheit (12) und einer Steuereinheit (44),
- Mitteln zum Speichern einer ersten Vielzahl von Bilddaten-Abtastwerten, die von der Wandlereinheit (12) kommen, und
- mit der Steuereinheit (44) verbundenen Mitteln zum Adressieren bestimmter Abtastwert-Speicherplätze in den Speichermitteln,
- - wobei die Speichermittel Mittel zum Auslesen eines Datenabtastwertes aus der ersten Vielzahl, der vorher an einem jeweils adressierten Speicherplatz gespeichert wurde, an die Wandlereinheit (12) enthalten,

dadurch gekennzeichnet, daß
- die Speichermittel (54) Datenabtastwerte für im wesentlichen nur eine Bildinformationszeile speichern können und
- die Adressiermittel (56, 58, 60) Mittel zum Einschreiben eines jeweiligen Datenabtastwerts aus einer zweiten von der Wandlereinheit (12) empfangenen Vielzahl in denselben adressierten Abtastwert-Speicherplatz enthalten.

2. Dekodiereinrichtung nach Anspruch 1, dadurch gekennzeichnet, daß die Adressiermittel (56, 58, 60) auf einen vorgegebenen Wert voreinstellbar sind.

3. Dekodiereinrichtung nach Anspruch 2, dadurch gekennzeichnet, daß die Adressiermittel (56, 58, 60) Mittel zur sequentiellen Adressierung einer Vielzahl von Speicherplätzen der Speichermittel ab dem voreingestellten Wert enthalten.

4. Dekodiereinrichtung nach Anspruch 3, gekennzeichnet durch Mittel (58) zum Vergleichen eines von den Adressiermitteln (56, 58, 60) erzeugten Adreßwerts mit einem zweiten vorgegebenen Wert und zum davon abhängigen Erzeugen eines ausgewählten Zeichens.

5. Dekodiereinrichtung nach Anspruch 4, gekennzeichnet durch Mittel (60) zum Einstellen der Adressiermittel (56, 58, 60) auf den vorgegebenen Wert abhängig vom Vorhandensein des ausgewählten Zeichens.

6. Dekodiereinrichtung nach Anspruch 5, dadurch gekennzeichnet, daß die Auslese- und Einschreibmittel Mittel zum Überschreiben desselben adressierten Speicherplatzes unmittelbar nach dessen Auslesen enthalten.

7. Dekodiereinrichtung nach Anspruch 5, dadurch gekennzeichnet, daß die Adressiermittel (56, 58, 60) einen schrittweise aufwärts- oder abwärtszählenden Adreßzähler enthalten, und daß die Vergleichsmittel einen mit dem Adreßzähler verbundenen Vergleicher (58) enthalten.

8. Verfahren zum Dekodieren einer Vielzahl von vorher kodierten Informationssignalen in einem eine Speichereinheit (54) und ein damit verbundenes Adressenregister (56) aufweisenden Dekodierer (52), gekennzeichnet durch die folgenden Schritte:

(A) Speichern einer vorgegebenen Menge von Abtastwerten eines ersten kodierten Informationssignals in der Speichereinheit (54), die Datenabtastwerte für im wesentlichen nur eine Bildinformationszeile speichern kann;

(B) Ermitteln einer dekodierten Anfangsadresse und Einlesen der Anfangsadresse in das Adressenregister (56);

(C) Auslesen eines Abtastwerts der dekodierten Information aus einem durch die Adresse im Adressenregister (56) angegebenen Speicherplatz der Speichereinheit (54);

(D) Einlesen eines Abtastwerts eines nachfolgend kodierten Informationssignals in denselben Speicherplatz;

(E) Vergleichen der aktuellen Adresse im Adressenregister (56) mit einem vorgegebenen Endadreßwert und bei Übereinstimmung Rückkehr zu Schritt (B), andernfalls

(F) Ändern der Adresse im Adressenregister (56) in vorgegebener Weise und dann Rückkehr zu Schritt (C).

9. Dekodierverfahren nach Anspruch 8, dadurch gekennzeichnet, daß die in Schritt (B) ermittelte Anfangsadresse sich für jedes kodierte Informationssignal in vorgegebener Weise ändert, wobei dieses Signal ein kodiertes Bildzeilensignal mit einer vorgegebenen Anzahl von Abtastwerten ist.

10. Dekodierverfahren nach Anspruch 9, dadurch gekennzeichnet, daß bei der in Schritt (F) erfolgenden Änderung der Adresse im Adressenregister (56) diese um 1 erhöht oder erniedrigt wird.

11. Dekodierverfahren nach Anspruch 9, dadurch gekennzeichnet, daß jedes kodierte Bildzeilensignal N Abtastwerte pro Zeile enthält, daß jede Zeile an einer vorgegebenen aufgeteilten Adresse an einem Übertragungspunkt in mindestens zwei Segmente aufgeteilt ist, und daß die aktuelle dekodierte Anfangsadresse des Schritts (B) nach folgender Formel ermittelt wird:

Anfangsadresse = (N-SP + PSA) Modulo N, wobei N die Anzahl der Abtastwerte, SP die aufgeteilte Adresse, und PSA die vorhergehende Anfangsadresse ist.

FIG. 1
(PRIOR ART)

EP 0 186 056 B1

FIG. 2

EP 0 186 056 B1